# EUROPÄISCHE PATENTSCHRIFT

(11) **EP 0 921 052 B1**
(45) Veröffentlichungstag und Bekanntmachung des Hinweises auf die Patenterteilung: **01.09.2004**
(21) Anmeldenummer: 98121116.2
(22) Anmeldetag: 09.11.1998
(51) Int. Cl.: B62D 27/02, B62D 29/00

(54) **Verbundbauteil mit mindestens einem Gussteil aus einem Leichtmetallwerkstoff**
Composite structural member with at least one light metal casting
Elément structurel avec au moins une pièce de coulée en métal léger

(30) Priorität: 06.12.1997 DE 19754248
(43) Veröffentlichungstag der Anmeldung: 09.06.1999
(73) Patentinhaber: Volkswagen Aktiengesellschaft, 38436 Wolfsburg (DE)
(72) Erfinder: Arnheim, Hans-Rudolf, Dipl.-Ing., 38477 Jembke (DE); Hillmann, Jürgen, Dr., 38518 Gifhorn (DE); Jonscher, Axel, 38106 Braunschweig (DE)

(56) Entgegenhaltungen:
- EP-A- 0 497 209
- DE-A- 4 323 178
- DE-A- 19 616 959
- DE-A- 19 640 754
- DE-A- 19 728 546
- US-A- 2 566 871

## Beschreibung

Bei der Herstellung von Fahrzeugkarosserien finden verstärkt Werkstoffe und Werkstoffkombinationen Verwendung, die eine exakte Abstimmung der Werkstoffeigenschaften in einem Bauteil in Abhängigkeit von Einsatzbedingungen und Einbauverhältnissen erlauben. Bisher werden hierzu Bauteile aus Blechen oder dünnwandigen Profilen eingesetzt, mit denen aus einer Vielzahl von einzelnen Teilen durch vorwiegend thermische Fügeverfahren z.B. die Karosserie eines Fahrzeuges hergestellt wird.

Es kommen im Fahrzeugbau zunehmend Werkstoffe aus Leichtmetallen oder Leichtmetalllegierungen zum Einsatz, aus denen die Karosserieaußenhaut oder auch tragende Bauteile von Kraftfahrzeugen bis hin zu vollständig aus Leichtmetall bestehenden Karosserien hergestellt werden. Derartige Leichtmetalle sind überwiegend Aluminium und in verstärktem Maße auch Magnesium, die beide hinsichtlich ihrer Verfügbarkeit, verarbeitungstechnisch und bezüglich der Werkstoffkennwerte besonders günstig sind.

Problematisch bei der Verwendung von derartigen Leichtmetallen im Fahrzeugbau ist vor allem, dass die Festigkeitseigenschaften von Leichtmetallblechen für manche Belastungen an Kraftfahrzeugteilen nicht ausreichend sind. Relativ unproblematisch und schon erprobt ist die Verwendung von Leichtmetallblechen zum Ersatz von großflächigen Stahlteilen der Karosserie - z.B. der Außenhaut - durch Aluminiumteile, da sie im Regelfall keinen besonders hohen Belastungen unterliegen. Insbesondere bei mechanisch stark belasteten Bauteilen treten jedoch Einzelbelastungen und Lastkollektive auf, die eine Herstellung derartiger Funktionsteile aus passend geformten Leichtmetallblechen nicht erlauben. Entweder würden die Bauteile aufgrund zu hoher Einzelbelastungen frühzeitig versagen oder es kommt viel früher als bei Stahlbauteilen zu einem Dauerversagen aufgrund von Ermüdungsbrüchen.

Eine Möglichkeit zur Erhöhung der Festigkeit von Leichtmetallbauteilen besteht darin, dass zur Herstellung der Leichtmetallbauteile statt relativ dünner Leichtmetallbleche aus Leichtmetallen oder Leichtmetalllegierungen hergestellte Gussteile verwendet werden, die entsprechend der Möglichkeiten der Gießtechnik in Bereichen höherer Belastungen mehr Material vorsehen und damit belastungsgerechter konstruiert werden können.

Aufgrund der zum Gießen notwendigen Mindestwanddicken derartiger gegossener Leichtmetallteile werden diese Teile aber auch in den nicht so hoch belasteten Bereichen insgesamt viel schwerer als nur aus dünnen Leichtmetallblechen hergestellte Leichtmetallteile, wodurch ein großer Teil der Gewichtsreduktion durch das leichtere Material wieder verloren geht.

Um diesem Missstand zu begegnen, ist es bekannt, besagte Gussteile mit einer Beplankung aus Leichtmetallblechen zu versehen. Eine solche Lösung wird durch die gattungsgemäße DE 43 23 178 A1 offenbart, die ihrerseits ein als Gussteil ausgebildetes, tragendes Karosserieteil aus Aluminium betrifft, wobei das Gussteil ein Druckgussteil in Form eines Gerippes ist und wobei außenseitig auf das Gerippe eine mit demselben verschweißte und/oder verklebte Beplankung aus Aluminiumblech(en) vorgesehen ist. Des Weiteren wird mit der EP 0 497 209 A2 ein gegossenes Fahrzeug-Aufbauteil offenbart, welches im Druckgussverfahren aus einem Leichtmetallwerkstoff hergestellt ist und eine angegossene oder eingegossene Stahlblech-Struktur aufweist, die die Fahrzeug-Außenhaut des Aufbauteiles bildet.

Aufgabe der vorliegenden Erfindung ist es, ein belastungsfähiges Verbundbauteil zur Bildung von Karosserieteilen von Kraftfahrzeugen zu schaffen, dessen Gewicht weiter optimiert ist.

Die Lösung dieser Aufgabe ergibt sich aus den Merkmalen des Anspruches 1. Die Unteransprüche beschreiben bevorzugte Weiterbildungen.

Neben einer deutlichen Gewichtsreduzierung, können durch eine derartige Bildung eines Verbundes betastungsgerecht konstruierte Bauteile hergestellt werden, bei denen Materialanhäufungen durch das Gussteil formtechnisch einfach und damit kostengünstig dort angeordnet werden, wo z.B. höhere Belastungen abgefangen werden müssen oder ein sonstiger Bedarf an einer Materialanhäufung besteht. In den nicht so hoch belasteten Bereichen können dementsprechend aus dünnwandigem, blechartigem Material geformte Bauteile angeordnet und mit dem Gussteil durch Bördeln verbunden werden. Derartiges blechartiges Material ist kostengünstig vorzufertigen und bereitzuhalten. Hierdurch wird insbesondere das Problem umgangen, dass derartige Bereiche des Verbundbauteiles gießtechnisch nicht mit beliebig geringen Wandstärken gefertigt werden können und daher bei einer Fertigung gemeinsam mit dem Gussteil das Gesamtgewicht des Verbundbauteiles ungerechtfertigt erhöhen würden. Das Gussteil liegt zumindest im wesentlichen verdeckt innerhalb der Außenhaut des Kraftfahrzeuges, was insbesondere zur ästhetischen Gesamtwirkung der Karosserieform beitragen kann.

Vorstehendes macht sich insbesondere in der Großserienfertigung von Kraftfahrzeugen vorteilhaft bemerkbar.

Besonders vorteilhaft ist es, wenn das blechartige Material aus Aluminium und/oder Magnesium und/oder ihren jeweiligen Legierungen hergestellt sein kann. Diese Materialien verbinden ein geringes spezifisches Materialgewicht mit günstigen Festigkeitseigenschaften, ihre Anwendung bringt daher eine große Gewichtsreduzierung des Verbundbauteiles gegenüber Stahlbauteilen.

Besonders vorteilhaft hinsichtlich der Kosten der Vorfertigung ist es, wenn das blechartige Material durch Walzen hergestellt wird, da dadurch kontinuierliche Verarbeitungsprozesse mit besonders günstigen Materialeigenschaften des gewalzten Materials kombinierbar sind.

Eine Weiterbildung sieht vor, dass das Gussteil in dem Verbundbauteil im wesentlichen versteifende und/oder tragende Funktion hat. Hierdurch können die Vorteile der Gießtechnik mit ihrer belastungsgerechten Gestaltung besonders günstig ausgenutzt werden, so dass die Herstellungskosten gering bleiben. Besonders vorteilhaft ist es, wenn das Gussteil aus einem Leichtmetall-Druckgussteil besteht. Die Druckgießtechnik erlaubt sehr formgenauen und hochwertigen Guss, so dass die damit hergestellten Bauteile besonders gute Eigenschaften aufweisen.

Eine weitere Verbesserung der Festigkeitseigenschaften ergibt sich für das Gussteil, wenn dieses kammerartige Bereiche zur Verstärkung und/oder Versteifung aufweist. Hierdurch können gezielte, gießtechnisch günstig zu fertigende Verstärkungen in das Gussteil eingebracht werden.

In einer anderen Weiterbildung ist das Bauteil aus dem blechartigen Material im wesentlichen im Bereich geringer Belastungen an dem Verbundbauteil angeordnet. Hierdurch können die Vorteile hinsichtlich der Gewichtseinsparung besonders weitgehend ausgeschöpft werden, da bei geringen Belastungen dieses Bauteil auch nur sehr dünnwandig ausgeführt werden kann. Dadurch wird die Gewichtseinsparung gegenüber einem in Gusstechnik ausgeführten, dickerwandigen Bauteil besonders groß.

Hinsichtlich der Verbindung zwischen Gussteil und Bauteil aus blechartigem Material ist es vorteilhaft, wenn das Gussteil mit dem Bauteil aus blechartigem Material zumindest abschnittsweise durch thermische Fügeverfahren verbunden ist. Hierdurch werden feste und gleichmäßige Verbindungen herstellbar, die die Übertragung von mechanischen Belastungen zwischen Gussteil und Bauteil aus blechartigem Material sicher gewährleisten. Besonders vorteilhaft können die Verfahren des Laserschweißens und/oder des Quetschnaht-Schweißens zur Anwendung kommen.

Eine andere Weiterbildung sieht vor, dass das Gussteil mit dem Bauteil aus blechartigem Material zumindest abschnittsweise durch Kleben verbunden ist. Derartige Verbindungen können insbesondere dann zum Einsatz kommen, wenn es sich nicht um hochbelastete Verbindungen zwischen Gussteil und Bauteil aus blechartigem Material handelt.

Ebenfalls können das Gussteil und Bauteil aus blechartigem Material zumindest abschnittsweise durch Stanznieten oder Druckfügen verbunden sein, wodurch aufwendige Vorfertigungen der beiden Verbindungspartner im Bereich der Verbindung entfallen können.

Es versteht sich für den Fachmann von selbst, dass Kombinationen der vorstehenden Verbindungen zwischen Gussteil und Bauteil aus blechartigem Material sowie andere ihm vertraute Verbindungen von der Erfindung mit umfasst sind. Insbesondere kombinierte Klebe-Stanzniet-, Klebe-Punktschweiß- und Klebe-Druckfüge-Verbindungen haben sich bei Versuchen als vorteilhaft erwiesen, da ein flächig aufgetragener Kleber bzw. ein Klebemittel in Form von Klebebändern oder -streifen gleichzeitig als Fugendichtmasse und Isolationsschicht gegenüber Kontaktkorrosion wirken kann.

Besonders vorteilhaft ist es, wenn das Verbundbauteil eine Heckklappe eines Kraftfahrzeuges ist.

Eine besonders vorteilhafte erfindungsgemäße Ausbildung eines Verbundes für den Einsatz an Karosserieteilen von Kraftfahrzeugen, zeigt die Zeichnung.

Es zeigt:
- Figur 1: eine Anwendung eines erfindungsgemäßen Verbundbauteiles in Form einer Kraftfahrzeug-Heckklappe in einer Draufsicht;
- Figur 2: ein Schnitt durch das Verbundbauteil entlang der Linie B-B gemäß Figur 1 mit Beispiel einer Bördelnaht;
- Figur 3: ein Schnitt durch das Verbundbauteil entlang der Linie A-A gemäß Figur 1 mit Beispiel einer Laserschweißnaht
- Figur 4: ein Schnitt durch eine abgeänderte Variante des Verbundbauteils entlang der Linie A-A gemäß Figur 1 mit Beispiel einer Stanznietung.

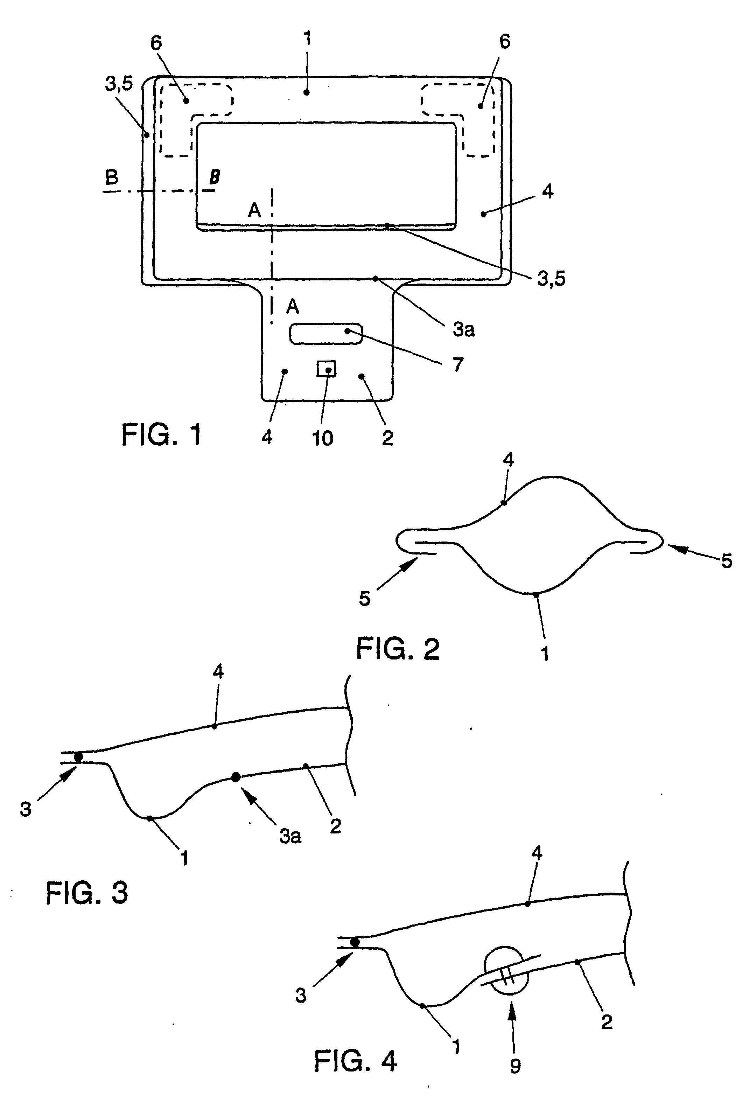

In den Figuren 1 bis 4 ist am Beispiel einer Heckklappe eines Kraftfahrzeuges prinzipienhaft dargestellt, wie das erfindungsgemäße Verbundbauteil gestaltet und eingesetzt werden kann. Dieser nur prinzipienhaft dargestellte Aufbau eines Verbundbauteiles lässt sich auf eine Vielzahl von Anwendungen und Varianten übertragen.

In der Figur 1 ist in einer Draufsicht eine Heckklappe eines Kraftfahrzeuges dargestellt, wie sie beispielsweise an Kompaktfahrzeugen mit einem Schrägheck weit verbreitet ist. In der herkömmlichen Stahlblechtechnik werden derartige Heckklappen üblicherweise aus einem innenliegenden Stahlblechteil sowie einem außenliegenden, die Karosserieaußenhaut mitbildenden Stahlblechteil zusammengefügt, wobei an dem innenliegenden und/oder dem außenliegenden Stahlblechteil zusätzliche Verstärkungen oder Abstützungen aus Stahlblech angebracht sein können.

Bei dem vorliegenden Ausführungsbeispiel eines erfindungsgemäßen Verbundbauteiles in Form einer Heckklappe umfasst die Heckklappe einen die Heckklappe versteifenden Rahmen 1, der als Gussteil aus Magnesium- oder Aluminiumdruckguss ausgeführt ist. Dieser Rahmen 1 ist auf der später dem Fahrgastraum zugewandten Innenseite der Kraftfahrzeugkarosserie angeordnet. Der Innenrahmen 1, der bei der gezeigten Heckklappe die Versteifungsfunktion übernimmt, besitzt im wesentlichen die Abmessungen des oberen Teils einer nicht dargestellten Fahrzeughecköffnung und umläuft diese entlang deren äußeren Begrenzungen als im Grundsatz rechteckiger Rahmen. Der Querschnitt dieses Innenrahmens 1, der in den Figuren 2 bis 4 noch näher dargestellt ist, ist in Form eines umlaufenden trogförmigen Kanals gebildet, dessen genaue Ausbildung sich unmittelbar aus festigkeitstechnischen und gießtechnischen Anforderungen ergibt. Innerhalb dieses trogförmigen Querschnittes des Rahmens 1 können mit eingegossene Verstärkungshohlräume 6 angeordnet sein, die beispielsweise in Bereichen besonders hoher mechanischer Belastung eine zusätzliche Versteifung des Rahmens 1 bewirken. Der Rahmen 1 dient der Aufnahme einer Heckfensterscheibe.

Der Innenrahmen 1 ist zur Fahrzeugaußenseite hin mit einem Außenblech 4 abgedeckt, das aus gewalztem Magnesium- oder Aluminiumblech besteht. Das Außenblech 4 ist bei diesem Ausführungsbeispiel einteilig über die gesamte Außenfläche der Heckklappe ausgebildet. Im oberen Bereich der Heckklappe schließt das Außenblech 4 den Innenrahmen 1 nach außen ab und bildet mit diesem zusammen ein geschlossenes Hohlprofil. Da aufgrund des Außenbleches 4 die mitgegossenen kammerartigen Verstärkungshohlräume 6 des Innenrahmens 1 in der Draufsicht der Figur 1 an sich verdeckt und damit nicht sichtbar sind, sind sie in der Figur 1 lediglich strichliert angedeutet.

In der Figur 1 befindet sich unterhalb des Rahmens 1 eine Innenschürze 2, die auf der späteren Fahrzeuginnenseite der Heckklappe angeordnet ist und an dem Rahmen 1 befestigt ist. Im Einbauzustand verschließt diese Innenschürze 2 aus dünnwandigem gewalztem Magnesiumblech zusammen mit dem unteren Bereich des Außenbleches 4 den unteren Bereich der Fahrzeughecköffnung. Diese Innenschürze 2 hat als schüfzenartiges Bauteil aus dünnwandigem, blechartigem Material hauptsächlich die Aufgabe, die untere Fahrzeughecköffnung abzuschließen, wobei üblicherweise im unteren Kantenbereich der Innenschürze 2 der Schlosskasten 10 der Verriegelung der Heckklappe angebracht ist. Ansonsten hat das Heckblech 2 im wesentlichen Verkleidungsfunktionen, wobei die genaue Formgebung beispielsweise auch noch Funktionsflächen wie z. B. einen Einbauraum für einen Heckklappengriff aufweisen kann. Die mechanischen Belastungen der Innenschürze 2 sind relativ gering, daher reicht für die Konstruktion aus Festigkeitsgründen eine reine Blechkonstruktion aus. Eine Verlängerung des Innenrahmens 1 auch in diesen Bereich wäre nicht gerechtfertigt, da hierdurch der Rahmen 1 wesentlich schwerer würde und komplexer zu fertigen wäre. Daher wird der innenliegende Rahmen 1 nur auf den oberen Bereich der Hecköffnung beschränkt und im unteren Bereich der Hecköffnung die im wesentlichen blechartige Innenschürze 2 z. B. durch eine Schweißnahtverbindung 3 als Schürze an den Rahmen 1 angesetzt. Hierdurch sind die Festigkeitsvorteile des als stabiles Gussteil ausgeführten Innenrahmens 1 mit den Gewichtsvorteilen einer leichtgewichtigen, innenliegenden Blechabdeckungsschürze 2 des unteren Teiles der Hecköffnung kombinierbar.

Das auf der Außenseite der Heckklappe angebrachte Außenblech 4, in dem z. B. eine Nummernschildvertiefung 7 angeordnet sein kann, überdeckt den Rahmen 1 sowie die Innenschürze nach außen. Die Fügeverbindung zwischen dem Rahmen 1 und dem Außenblech 4 kann beispielsweise durch in der Figur 2 dargestellte Bördelnähte 5 erfolgen, bei denen das Außenblech 4 den Rahmen 1 jeweils übergreift und als Bördelung 5 nach innen umgebogen und an dem Rahmen 1 wie in Figur 2 dargestellt festgelegt ist. Alternativ kann das Außenblech 4, wie in Figur 3 und Figur 4 dargestellt ist, auch mit dem Rahmen 1 verschweißt sein.

Innenseitig ist die Innenschürze 2 aus Magnesiumblech mittels einer Schweißnaht 3a mit dem Rahmen 1 stoßverschweißt und bildet eine innenliegende Abdeckung des unteren Bereiches des Außenbleches 4 gegenüber dem Fahrzeuginnenraum. Diese Innenschürze 2 kann beispielsweise alternativ auch durch eine in geeignet geformte Aufnahmestellen des unteren Bereiches des Außenbleches 4 eingeclipste Kunststoffplatte gebildet sein, die dann gleichzeitig eine innenliegende Kunststoffverkleidung der Heckklappe ausbildet.

In einer Variante der Heckklappe kann gemäß Figur 4 die Innenschürze 2 auch mittels einer einfach auszuführenden Stanznietverbindung 9 mit dem Rahmen 1 verbunden sein. Eine derartige Stanznietverbindung ist insbesondere dann sinnvoll, wenn aufgrund der Materialkombination des Materials der Innenschürze 2 und des Innenrahmens 1 eine Verschweißung dieser beiden Bauteile nur schwer oder gar nicht auszuführen ist.

### BEZUGSZEICHENLISTE

- 1: Innenrahmen
- 2: Innenschürze aus dünnwandigem, blechartigem Material
- 3, 3a: Schweißnaht
- 4: Außenblech
- 5: Bördelnaht
- 6: Verstärkungshohlraum
- 7: Kennzeichenvertiefung
- 9: Stanzniet
- 10: Schloßkasten

## Patentansprüche

1. Verbundbauteil zur Bildung von Karosserieteilen von Kraftfahrzeugen, aufweisend mindestens ein Gussteil (1) aus einem Leichtmetall und/oder einer Leichtmetalllegierung, welches mit mindestens einem weiteren Bauteil (4) aus einem im wesentlichen dünnwandigen, blechartigen Material zumindest abschnittsweise verbunden ist, wobei dessen Bauteil (4) aus blechartigem Material aus einem Leichtmetall und/oder einer Leichtmetalllegierung besteht, **dadurch gekennzeichnet, dass** das Verbundbauteil einen Teil der Karosserieaußenhaut bildet, einen Teil der außenliegenden Karosseriehaut bildet und das innenliegende Gussteil (1) zumindest teilweise übergreift, und wobei das Gussteil (1) mit dem Bauteil (4) aus blechartigem Material zumindest abschnittsweise durch Bördeln (5) verbunden ist.

2. Verbundbauteil nach Anspruch 1, **dadurch gekennzeichnet, dass** das blechartige Material aus Aluminium und/oder Magnesium und/oder ihren jeweiligen Legierungen besteht.

3. Verbundbauteil nach einem der vorstehenden Ansprüche, **dadurch gekennzeichnet, dass** das blechartige Material durch Walzen hergestellt ist.

4. Verbundbauteil nach einem der vorstehenden Ansprüche, **dadurch gekennzeichnet, dass** das Gussteil (1) in dem Verbundbauteil im wesentlichen versteifende und/oder tragende Funktion hat.

5. Verbundbauteil nach einem der vorstehenden Ansprüche, **dadurch gekennzeichnet, dass** das Gussteil (1) aus einem Leichtmetall-Druckgussteil besteht.

6. Verbundbauteil nach einem der vorstehenden Ansprüche, **dadurch gekennzeichnet, dass** das Gussteil (1) kammerartige Bereiche (6) zur Verstärkung und/oder Versteifung aufweist.

7. Verbundbauteil nach einem der vorstehenden Ansprüche, **dadurch gekennzeichnet, dass** das Bauteil (2, 4) aus dem blechartigen Material im wesentlichen im Bereich geringer Belastungen an dem Verbundbauteil angeordnet ist.

8. Verbundbauteil nach Anspruch 7, **dadurch gekennzeichnet, dass** das Bauteil (2, 4) aus dem blechartigen Material in dem Verbundbauteil im wesentlichen Verkleidungsfunktionen hat.

9. Verbundbauteil nach einem der vorstehenden Ansprüche, **dadurch gekennzeichnet, dass** das Gussteil (1) mit dem Bauteil (2, 4) aus blechartigem Material zumindest abschnittsweise (3) durch thermische Fügeverfahren verbunden ist.

10. Verbundbauteil nach Anspruch 9, **dadurch gekennzeichnet, dass** das Gussteil (1) mit dem Bauteil (2, 4) aus blechartigem Material zumindest abschnittsweise (3) durch Laserschweißen verbunden ist.

11. Verbundbauteil nach Anspruch 9, **dadurch gekennzeichnet, dass** das Gussteil (1) mit dem Bauteil (2, 4) aus blechartigem Material zumindest abschnittsweise (3) durch Quetschnaht-Schweißen verbunden ist.

12. Verbundbauteil nach einem der vorstehenden Ansprüche, **dadurch gekennzeichnet, dass** das Gussteil (1) mit dem Bauteil (2, 4) aus blechartigem Material zumindest abschnittsweise durch Kleben verbunden ist.

13. Verbundbauteil nach einem der vorstehenden Ansprüche, **dadurch gekennzeichnet, dass** das Gussteil (1) mit dem Bauteil (2, 4) aus blechartigem Material zumindest abschnittsweise durch Stanznieten (9) verbunden ist.

14. Verbundbauteil nach einem der vorstehenden Ansprüche, **dadurch gekennzeichnet, dass** das Verbundbauteil eine Heckklappe eines Kraftfahrzeuges ist.

## Claims

1. Composite component for forming body parts of motor vehicles, which includes at least one casting (1) that is made from a light metal and/or a light metal alloy and at least in sections is connected to at least one further component (4) which is made from a substantially thin-walled, sheet-like material, wherein its component (4) made from sheet-like material consists of a light metal and/or a light metal alloy, **characterized in that** the composite component forms part of the body outer skin, forms part of the external body skin and at least partially engages over the internal casting (1), the casting (1) being connected to the component (4) made from sheet-like material, at least in sections, by flanging (5).

2. Composite component according to Claim 1, **characterized in that** the sheet-like material consists of aluminium and/or magnesium and/or their respective alloys.

3. Composite component according to one of the preceding claims, **characterized in that** the sheet-like material is produced by rolling.

4. Composite component according to one of the preceding claims, **characterized in that** the casting (1) substantially has a reinforcing and/or supporting function in the composite component.

5. Composite component according to one of the preceding claims, **characterized in that** the casting (1) comprises a light metal pressure die casting.

6. Composite component according to one of the preceding claims, **characterized in that** the casting (1) has chamber-like regions (6) for strengthening and/or reinforcing purposes.

7. Composite component according to one of the preceding claims, **characterized in that** the component (2, 4) made from the sheet-like material is substantially arranged in the region where the loads acting on the composite component are low.

8. Composite component according to Claim 7, **characterized in that** the component (2, 4) made from the sheet-like material substantially performs lining functions in the composite component.

9. Composite component according to one of the preceding claims, **characterized in that** the casting (1) is connected to the component (2, 4) made from sheet-like material, at least in sections (3), by thermal joining methods.

10. Composite component according to Claim 9, **characterized in that** the casting (1) is connected to the component (2, 4) made from sheet-like material, at least in sections (3), by laser welding.

11. Composite component according to Claim 9, **characterized in that** the casting (1) is connected to the component (2, 4) made from sheet-like material, at least in sections (3), by mash seam welding.

12. Composite component according to one of the preceding claims, **characterized in that** the casting (1) is connected to the component (2, 4) made from sheet-like material, at least in sections, by adhesive bonding.

13. Composite component according to one of the preceding claims, **characterized in that** the casting (1) is connected to the component (2, 4) made from sheet-like material, at least in sections, by self-piercing rivets (9).

14. Composite component according to one of the preceding claims, **characterized in that** the composite component is a tailgate of a motor vehicle.

## Revendications

1. Elément composite pour former des pièces de carrosserie de véhicules automobiles, qui présente au moins une pièce coulée (1) en un métal léger et/ou en un alliage de métaux légers et qui est reliée au moins par parties à au moins un autre composant (4) en un matériau du type en tôle, essentiellement à paroi mince, ce composant (4) en matériau de type en tôle étant constitué d'un métal léger et/ou d'un alliage de métaux légers, **caractérisé en ce que** l'élément composite forme une partie de la peau extérieure de la carrosserie et chevauche au moins en partie la pièce coulée (1) située à l'intérieur, au moins certaines zones de la pièce coulée (1) étant reliées par rabattement (5) au composant (4) en matériau du type en tôle.

2. Elément composite selon la revendication 1, **caractérisé en ce que** le matériau du type en tôle est constitué d'aluminium et/ou de magnésium et/ou d'un quelconque de leurs alliages.

3. Elément composite selon l'une des revendications précédentes, **caractérisé en ce que** le matériau du type en tôle est fabriqué par laminage.

4. Elément composite selon l'une des revendications précédentes, **caractérisé en ce que** dans l'élément composite, la pièce coulée (1) joue essentiellement un rôle de renfort et/ou de support.

5. Elément composite selon l'une des revendications précédentes, **caractérisé en ce que** la pièce coulée (1) est constituée d'une pièce en métal léger coulée sous pression.

6. Elément composite selon l'une des revendications précédentes, **caractérisé en ce que** la pièce coulée (1) présente des zones (6) en forme de chambres en vue d'un renforcement et/ou d'une rigidification.

7. Elément composite selon l'une des revendications précédentes, **caractérisé en ce que** le composant (2, 4) en matériau de type en tôle est disposé essentiellement dans la zone où les contraintes sur l'élément composite sont plus faibles.

8. Elément composite selon la revendication 7, **caractérisé en ce que** dans l'élément composite, le composant (2, 4) en matériau du type en tôle a essentiellement un rôle d'habillage.

9. Elément composite selon l'une des revendications précédentes, **caractérisé en ce qu'**au moins certaines parties (3) de la pièce coulée (1) sont reliées au composant (2, 4) en matériau du type en tôle par un procédé d'assemblage thermique.

10. Elément composite selon la revendication 9, **caractérisé en ce qu'**au moins certaines parties (3) de la pièce coulée (1) sont reliées au composant (2, 4) en matériau du type en tôle par soudage au laser.

11. Elément composite selon la revendication 9, **caractérisé en ce qu'**au moins certaines parties (3) de la pièce coulée (1) sont reliées au composant (2, 4) en matériau du type en tôle par soudage à cordon écrasé.

12. Elément composite selon l'une des revendications précédentes, **caractérisé en ce qu'**au moins certaines parties de la pièce coulée (1) sont reliées au composant (2, 4) en matériau du type en tôle par collage.

13. Elément composite selon l'une des revendications précédentes, **caractérisé en ce qu'**au moins certaines parties de la pièce coulée (1) sont reliées au composant (2, 4) en matériau du type en tôle par estampage/rivetage (9).

14. Elément composite selon l'une des revendications précédentes, **caractérisé en ce que** l'élément composite est le capot arrière d'un véhicule automobile.
